Europäisches Patentamt

European Patent Office

Office européen des brevets

(19)

(11) Veröffentlichungsnummer: **0 001 056**
**B1**

(12) **EUROPÄISCHE PATENTSCHRIFT**

(21) Anmeldenummer: 78100647.3

(22) Anmeldetag: 11.08.78

(51) Int. Cl³: **A 47 J 31/057**

(54) Gerät zum Bereiten von Kaffee oder Tee

(30) Priorität: 03.09.77 DE 2739834

(43) Veröffentlichungstag der Anmeldung:
21.03.79 Patentblatt 7906

(45) Bekanntmachung des Hinweises auf die Patenterteilung:
17.09.80 Patentblatt 8019

(84) Benannte Vertragsstaaten:
BE CH FR GB LU NL SE

(56) Entgegenhaltungen:
DE - A - 1 679 065
DE - A - 2 010 675
DE - U - 7 427 635
FR - A - 1 409 684
US - A - 3 869 968

(73) Patentinhaber: WIGO Gottlob Widmann & Söhne GmbH & Co.KG
Alleenstrasse 13
D - 7220 Villingen-Schwenningen DE

(72) Erfinder: Fischer, Kurt
Scheffelstrasse 26a
D - 7737 Bad Dürrheim DE

(74) Vertreter: Scherrmann, Walter, Dipl.-Ing.
Webergasse 3
D - 7300 Esslingen DE

Courier Press, Leamington Spa, England.

## Gerät zum Bereiten von Kaffee oder Tee

Die Erfindung bezieht sich auf ein Gerät zum Bereiten von Kaffee oder Tee mit einem Wasserbehälter, einer eine elektrische Heizeinrichtung aufweisenden Heizplatte für ein Auffanggefäß neben dem Wasserbehälter und einem an den Behälter angeschlossenen Kanal für den Transport des Wassers zu einem oberhalb des Auffanggefäßes angeordneten Filter, wobei ein Teil des Kanals durch eine sich innerhalb der Heizplatte erstreckende Wasserkammer gebildet wird.

Bei diesen bekannten Geräten ergibt sich die Schwierigkeit des Wärmekontaktes und -überganges zwischen der Heizplatte, der Wasserkammer und dem Boden des meist aus Glas bestehenden Auffanggefässes, das von der Verfahrenstechnik in der Glasfertigung her nie plan ist. Außerdem erfordert die bisherige bekannte Anordnung eine beträchtliche Leitungslänge zwischen dem Wasserbehälter und der beheizten Wasserkammer sowie zwischen dieser und dem Steigrohr.

Aufgabe der Erfindung ist es, einen guten Wärmekontakt und -übergang zwischen der die Wasserkammer enthaltenden Heizplatte und dem Auffanggefäß, z.B. einem Kaffeekrug, zu erreichen und außerdem die Leitungslänge wesentlich zu verringern.

Diese Aufgabe wird erfindungsgemäß dadurch gelöst, daß die Heizplatte seitlich vom Auffanggefäß angeordnet ist und dieses segmentförmig umgibt. Infolge dieser erfindungsgemäßen Ausbildung und Anordnung wird das Auffanggefäß von der Seite her in horizontaler Richtung beheizt. Hierbei umfassen auch Teile der Wasserkammer das Auffanggefäß, z.B. einen Krug, segmentförmig an einer Seite seiner Mantelfläche. Dies führt zu dem gewünschten guten Wärmekontakt und -übergang zu dem Auffanggefäß und einer um mindestens die Hälfte verkürzten Leitungslänge.

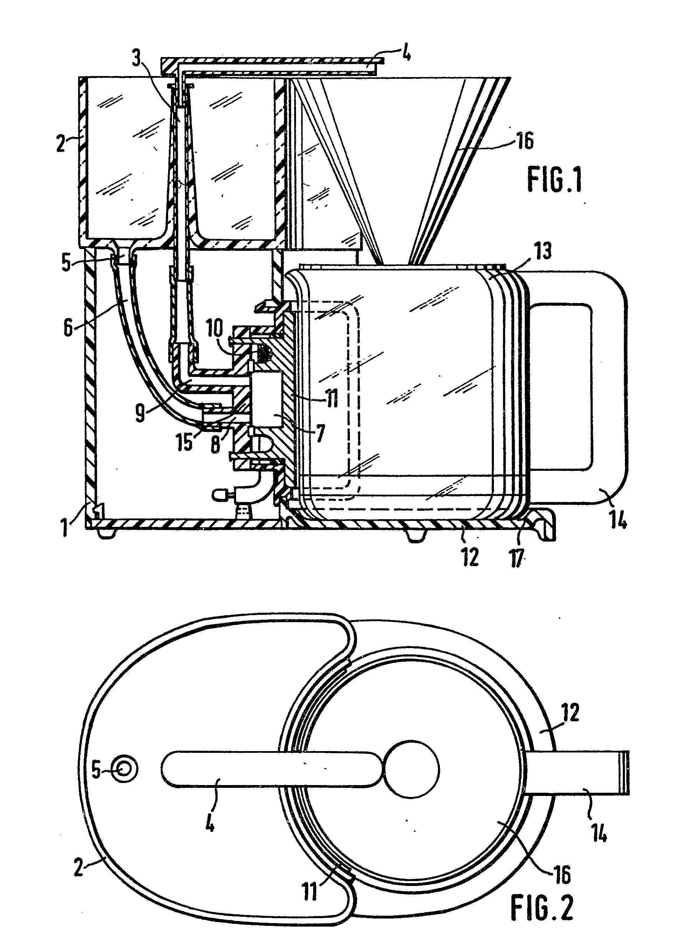

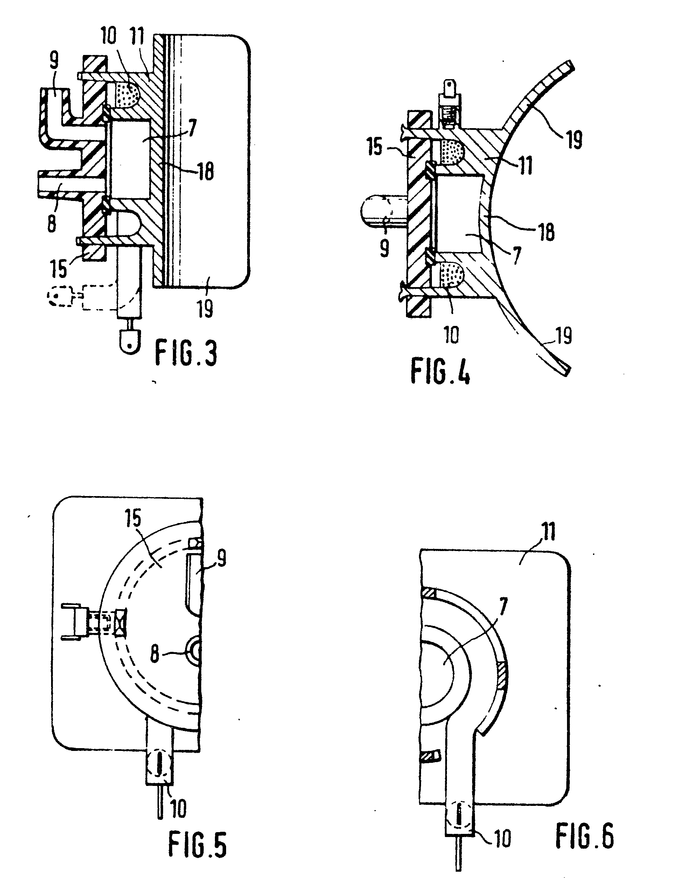

In der Zeichnung ist ein Ausführungsbeispiel des Gegenstandes der Erfindung dargestellt. Es zeigen Figur 1 ein Gerät zum Bereiten von Kaffee oder Tee gemäß der Erfindung in einem Längsschnitt, Figur 2 das Gerät gemäß Figur 1 in einer Draufsicht, Figur 3 die Wasserkammer des Gerätes gemäß Figur 1 in einem Längsschnitt in einer Teildarstellung, Figur 4 die Wasserkammer gemäß Figur 3 in einem waagerechten Schnitt und Figuren 5 und 6 die Wasserkammer je in einer Ansicht mit und ohne Abdeckplatte.

Das Gerät zum Bereiten von Kaffee oder Tee besteht aus einem Gehäuse 1 mit dem Frischwasserbehälter 2, dem Steigrohr 3 und dem Wasserüberlauf 4. Der Auslauf 5 des Frischwasserbehälters ist durch die Leitung 6 mit dem Eingang 8 der Wasserkammer 7 verbunden, an deren Ausgang 9 sich das Steigrohr 3 anschließt. Eine Heizvorrichtung 10 dient in üblicher Weise zum Beheizen der Heizplatte 11 und der Wasserkammer 7. Auf dem Boden 12 des Gehäuses 1 steht das z.B. von einem Kaffeekrug dargestellte Auffanggefäß 13 mit dem Handgriff 14. Bei der Bereitung von Kaffee ist über dem Auffanggefäß 13 ein Kaffeefilter 16 angeordnet.

Die Heizplatte 11 weist auf der dem Auffanggefäß 13 zugewandten Seite eine der Umfangsgestalt des Auffanggefäßes 13 angepaßte runde Wand 18 auf, die mit seitlichen das Auffanggefäß 13 umfassenden Flügeln 19 nach beiden Seiten über die Heizplatte hinaus verlängert ist. Auf diese Weise ist die in der Heizplatte 11 enthaltene Wasserkammer 7 auf der einen Seite durch die das Auffanggefäß 13 umfassende Wand 18 der Heizplatte 11 und auf der anderen Seite durch eine abnehmbare Deckplatte 15 begrenzt, die auch den Eingang 8 und den Ausgang 9 der Wasserkammer 7 aufweist. Der Boden 12 des Gehäuses 1 ist mit einem runden Führungsrand 17 versehen, der sicherstellt, daß das Auffanggefäß 13 beim Aufsetzen auf den Boden 12 in die richtige Lage gegenüber der Heizplatte 11 kommt, indem es seitlich gegen diese anliegt.

Das in den Frischwasserbehälter 2 eingefüllte Wasser gelangt über die Leitung 6 zu der Wasserkammer 7. In dieser wird es durch die durch einen Rohrheizkörper gebildete Heizvorrichtung 10 erhitzt. Gleichzeitig wird die Heizplatte 11 erhitzt, und die Wärme wird über die runde Wand und deren Flügel 19 auf das gegen diese anliegende Auffanggefäß 13 übertragen.

Das in der Wasserkammer 7 erhitzte Wasser wird über den Ausgang 9 der Wasserkammer auf kurzem Wege über das Steigrohr 3 und den Wasserlauf 4 gegebenenfalls in den Filter 16 geleitet, der bei der Bereitung von Kaffee mit Kaffeepulver gefüllt ist Der gefilterte Kaffee fließt sodann in das Auffanggefäß 13.

**Patentansprüche:**

1. Gerät zum Bereiten von Kaffee oder Tee mit einem Wasserbehälter (2), einer eine elektrische Heizeinrichtung (10) aufweisenden Heizplatte (11) für ein Auffanggefäß (13) neben dem Wasserbehälter (2) und einem an den Behälter (2) angeschlossenen Kanal für den Transport des Wassers zu einem oberhalb des Auffanggefäßes (13) angeordneten Filter (16), wobei ein Teil des Kanals durch eine sich innerhalb der Heizplatte (11) erstreckende Wasserkammer (7) gebildet wird, dadurch gekennzeichnet, daß die Heizplatte (11) seitlich vom Auffanggefäß (13) angeordnet ist und dieses semgentförmig umgibt.

2. Gerät nach Anspruch 1, dadurch gekennzeichnet, daß der Bodenteil des Gehäuses (1) Führungsflächen enthält, durch welche die Lage des Auffanggefäßes (13) derart bestimmt ist, daß es seitlich an der Heizplatte (11) anliegt.

3. Gerät nach Anspruch 1, dadurch gekennzeichnet, daß die Führungsflächen durch einen runden Führungsflächen durch einen runden Führungsrand (17) gebildet sind.

4. Gerät nach Anspruch 1, dadurch gekennzeichnet, daß die in der Heizplatte (11) enthaltende Wasserkammer (7) auf der dem Auffanggefäß zugewandten Seite durch die dieses umfassende Wand (18) der Heizplatte (11) und auf der anderen Seite durch eine besondere Deckplatte (15) begrenzt ist, die den Eingang (8) und den Ausgang (9) der Wasserkammer (7) enthält.

## Claims

1. Device for preparing coffee or tea, provided with a water reservoir (2), electric heating means (10) with a heating plate (11) for a receptacle (13), arranged laterally of the water reservoir (2) and with a conduit connected to the water reservoir (2) for leading the water to a filter (16), which is arranged above the receptacle (13), a part of the conduit being formed by water chamber (7) within the heating plate (11), characterized by the fact that the heating pipe (11) is arranged laterally of the receptacle (13) and is embracing same segmentally.

2. Device according to claim 1, characterized by the fact that the bottom part of the housing (1) is provided with guide surfaces, positioning the receptacle (13) in such a way that it is laterally contacting the heating pipe (11).

3. Device according to claim 1, characterized by the fact that the guide surfaces are constituted by a circular guide rim (17).

4. Device according to claim 1, characterized by the fact that the water chamber (7) provided in the heating plate (11) is bounded on its side, which is facing the receptacle, by the wall (18) of the heating plate (11) embracing the receptacle, and on the opposite side by a separate cover plate (15) provided with the inlet (8) and the outlet (9) of the water chamber (7).

## Revendications

1. Appareil pour la préparation du café ou du thé, avec un réservoir d'eau (2), un plateau chauffant (11) comportant un dispositif de chauffage électrique (10) pour un récipient (13) à côté du réservoir d'eau (2), et un canal raccordé au réservoir (2) pour le transport de l'eau à un filtre (16) disposé au-dessus du récipient (13), une partie du canal étant formée par une chambre d'eau (7) s'étendant à l'intérieur du plateau chauffant (11), caractérisé par le fait que le plateau chauffant (11) est disposé sur le côté du récipient (13) et l'entoure en forme de segment.

2. Appareil selon la revendication 1, caractérisé par le fait que la partie du fond du corps (1) comporte des surfaces de guidage par lesquelles la position du récipient (13) est déterminée de façon qu'il vienne s'appliquer latéralement contre le plateau chauffant (11).

3. Appareil selon la revendication 1, caractérisé par le fait que les surfaces de guidage sont formées par un bord de guidage rond (17).

4. Appareil selon la revendication 1, caractérisé par le fait que la chambre d'eau (7) contenue dans le plateau chauffant (11) est limitée, du côté tourné vers le récipient, par la paroi (18), entourant ce dernier, du plateau chauffant (11) et, de l'autre côté, par une plaque de recouvrement particulière (15) qui contient l'entrée (8) et la sortie (9) de la chambre d'eau (7).

FIG.1

FIG.2

FIG.3

FIG.4

FIG.5

FIG.6